# EUROPEAN PATENT SPECIFICATION

(11) **EP 3 662 312 B1**
(45) Date of publication and mention of the grant of the patent: **22.05.2024**
(21) Application number: 17748775.8
(22) Date of filing: 04.08.2017
(51) Int. Cl.: G02B 6/44

(54) **OPTICAL DISTRIBUTION BOX**
OPTISCHER VERTEILERKASTEN
BOÎTIER DE DISTRIBUTION OPTIQUE

(43) Date of publication of application: 10.06.2020
(73) Proprietor: Prysmian S.p.A., 20126 Milan (IT)
(72) Inventor: ABBIATI, Fabio, 20126 Milano (IT)
(74) Representative: Perani & Partners S.p.A.
(86) International application number: PCT/EP2017/069840
(87) International publication number: WO 2019/025010

(56) References cited:
- WO-A1-2014/052963
- AU-A- 6 436 299
- US-A1- 2007 047 892
- US-A1- 2013 315 549
- US-A1- 2015 043 883
- US-A1- 2016 116 697

## Description

### Field of the invention

The present invention relates to the field of equipment and components for the installation of optical cables in optical networks. In particular, the present invention relates to an optical distribution box.

### Background of the invention

A FTTH ("Fiber To The Home") network is an optical access network providing a number of end users with broadband communication services, i.e. with services requiring data transmission at a very high rate, for example of some Mbit/s.

Typically, a FTTH network comprises a distribution box or cabinet which cooperates with an access network and which is typically located in the basement of the building where the end users reside. An optical trunk cable, hereinafter referred to as "riser cable", exits the distribution box and runs through the building from the basement up to all the building floors.

At each floor of the building, the riser cable may be optically connected to one or more optical cables, hereinafter referred to as "drop cables". Each drop cable typically terminates at its far end into a respective customer optical termination box located within or in proximity of the apartment or office of an end user.

During installation, the operator has to lay down the drop cable from a distribution cabinet to the apartment of the end user where the operator accesses the optical fiber units contained in the drop cable, connects the optical fiber units to optical connectors and makes further operations as required to connect optical fiber units from the drop cable to the optical fiber units directed to the relevant users, such as making optical fibre splices, connecting splitters and the like.

Accordingly, in order to serve many end users, large number of optical fiber units should be firmly secured in the optical distribution box. As the optical distribution boxes are generally located in small spaces, it is important to house such large number of optical fiber units without increasing box size and enabling simple installation procedure.

In order to avoid that external forces may cause damages to the optical fibers and the other components housed in the distribution box, combs are required inside the box to guide the fiber units and keep them in the proper position.

Combs made of metal material, in the form of a comb having a base wall from which project retaining walls are known in the art, where the base wall is to be fastened to the housing usually by means of screws or the like. Use of metallic elements and screw fastening operations increases the cost of the termination box.

WO 2015067314 discloses an assembly for retaining and securing an optical cable comprising a retaining element with a seat for an optical cable, an insertion port to allow side insertion of the optical cable and elastic arms configured to act on the optical cable for retaining the optical cable. The elastic arms are configured to elastically deform upon insertion of an optical cable in the seat and generate an elastic load directed towards the optical cable, thereby retaining the cable. With this solution, multiple fiber units insertion in the same port is neither disclosed nor possible.

WO 2011076275 discloses an optical termination box which comprises a base and sidewalls. A sidewall has retaining tabs protruding in a compartment of the base, and suitable for retaining an optical cable entering the compartment through passageways. Also with this solution, multiple fiber units insertion in the same passageway is not disclosed nor possible.

WO 2016078725 discloses an assembly for retaining and securing an optical cable, in which a retaining element has opposite retaining walls and a connection part. The assembly is accommodated in an insertion seat of a housing, which urges a portion of opposite retaining walls in mutual approach and causes a resilient deformation of the connection part. This prevents the optical cable to slip off from the retaining element. Again no multiple fiber units insertion is disclosed or possible.

FR 2919075 discloses a cassette for coiling and splicing optical fiber or conductive wires. The cassette is provided with two faces with respective devices for defining a path for the conductors, and in particular for the entry and exit of the conductors into/out of the faces. A retaining comb for the conductors is placed in each of said passages. When the conductors are introduced in the comb, a cover can be detached from the bottom of the cassette and positioned to close the open face of each comb. No multiple rows of fiber units insertion in the comb is disclosed. Moreover, the cover cooperates only with the box and does not prevent deformation of comb elements and, in particular does not prevent deformation of the intermediate comb elements.

EP 2463697 discloses a cassette for coiling fibers and maintaining splices. The cassette includes combs to retain optical fibers at the input and output of the cassette. No multiple rows of fiber units insertion in the comb is disclosed and deformation of intermediate comb elements is not prevented.

US 2013/315549 A1, US 2007/047892 A1, AU 64362 99 A, US 2015/043883 A1 and US 2016/116697 A1 disclose optical boxes comprising a housing and a retaining device configured to house optical fiber units arranged in at least two columns.

WO 2014/052963 A1 discloses an optical box according to the preamble of claim 1.

### Summary of the invention

The Applicant has tackled the problem providing an optical distribution box capable of hosting a large number of optical fiber units, while providing a firm and constant engagement of each optical fiber unit with the optical distribution box, without increasing the size of the optical box itself and enabling a simple installation procedure.

The Applicant has found an optical distribution box comprising a retaining device, housing multiple optical fiber units in superimposed rows, in which a cap prevents deformation of the retaining device and uneven retention of such optical fiber units.

In particular, the retaining device includes a comb having a plurality of parallel walls defining seats in which optical fiber units can be inserted in superimposed rows and the cap prevents deformation of the walls preserving constant width of the seats throughout the seats depth. In this manner, each row of optical fiber units has the same degree of engagement with the comb, irrespective of its position in the seat.

Therefore, the present invention relates to an optical box comprising a housing, a retaining device arranged in the housing and comprising at least two substantially parallel seats, wherein the seats are configured to house optical fiber units with friction between each optical fiber unit and the relevant seat, wherein the retaining device is configured to house optical fiber units arranged in at least two columns and two superimposed rows, and wherein the friction between each optical fiber unit and the corresponding seat is substantially the same in two superimposed rows.

The retaining device comprises a comb having retaining walls, the seats being defined by two adjacent retaining walls, a cap configured to be removably attached to the comb to maintain substantially constant the size of each seat.

The comb comprises a base wall, the retaining walls projecting from the base wall along a first direction, the retaining walls being arranged mutually spaced apart along a second direction transverse to the first direction to define seats between two adjacent retaining walls, the retaining walls being elastically deformable along the second direction, each seat being configured to retain one or more optical fiber units arranged therein along a third direction transverse to the first direction and the second direction, in superimposed relationship in the first direction, the cap being configured to engage each retaining wall of the comb to restrain elastic deformation of the retaining walls.

Preferably, the cap comprises securing walls, each securing wall is configured to be positioned in a corresponding seat between two adjacent retaining walls and to engage at least one of the two adjacent retaining walls.

More preferably, each securing wall is configured to engage two adjacent retaining walls. Preferably, the cap is configured to engage the retaining walls at a distal position from the base wall along the first direction.

Preferably, the cap comprises a support portion, the securing walls project from the support portion along the first direction and are arranged mutually spaced apart along the second direction.

Preferably, the retaining walls comprise two end retaining walls positioned at the two opposite sides of the base wall, and intermediate retaining walls arranged between the two end retaining walls, the securing walls comprise two end securing walls positioned at the two opposite sides of the support portion, and intermediate securing walls arranged between the two end securing walls, the number of intermediate securing walls being equal to the number of seats of the comb.

More preferably, the intermediate securing walls are configured to be inserted in the corresponding seats of the comb, the two end securing walls are configured to engage externally the end retaining walls of the comb.

Preferably, the retaining walls and the securing walls comprise corresponding ribs configured to cooperate to prevent displacement of the cap relative to the comb along the first direction.

More preferably, the ribs are formed at free ends portions of respective retaining walls and securing walls.

Preferably, the retaining walls and the securing walls comprise corresponding guiding portions to guide attachment of the cap with the comb along the third direction.

Preferably, each retaining wall has at least one surface facing an adjacent retaining wall, said at least one surface comprises friction members configured to engage optical fiber units arranged in the corresponding seat.

Preferably, each seat has an insertion opening for inserting optical fiber units in the seat along the first direction and two passage openings for allowing the optical fiber units to pass through the seat along the third direction.

### Brief description of the drawings

The present invention will now be described in more detail hereinafter with reference to the accompanying drawings, in which some embodiments of the invention are shown.
FIG. 1 is a perspective schematic view of an optical distribution box,
FIG. 2 is a perspective view of a retaining device suitable for being housed in the optical distribution box of figure 1,
FIG. 3 is a front view of the retaining device of figure 2, with some fiber units extending therethrough,

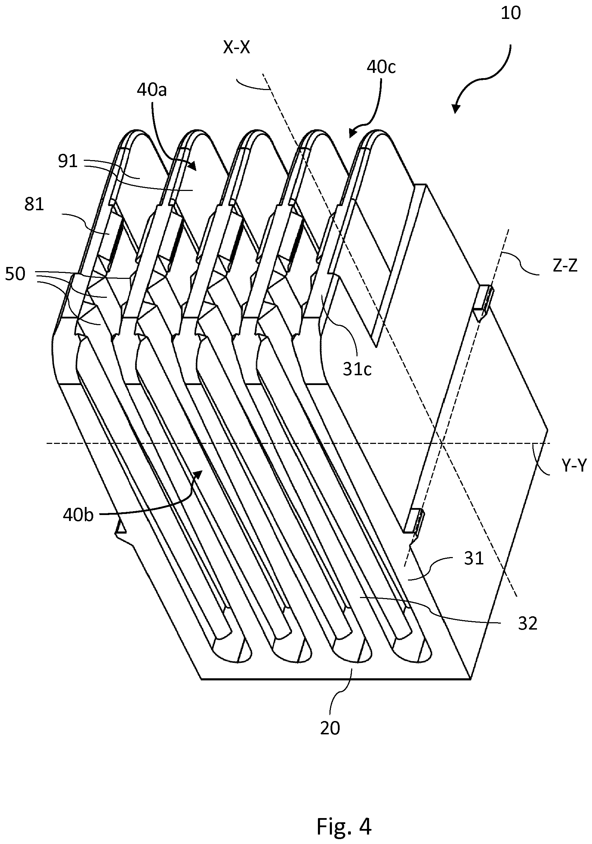

FIG. 4 is a perspective view of a comb of the retaining device of figure 2,

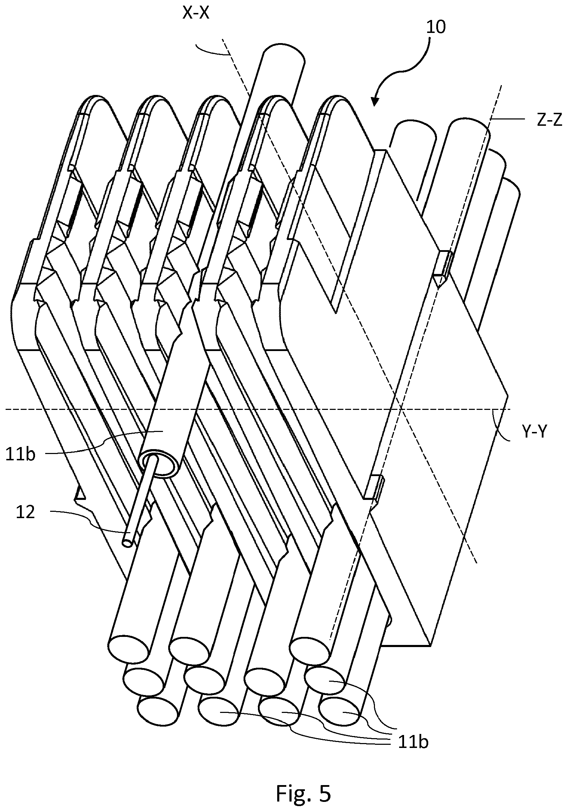

FIG. 5 is a perspective view of the comb of figure 4 with a fiber unit extending therethrough,

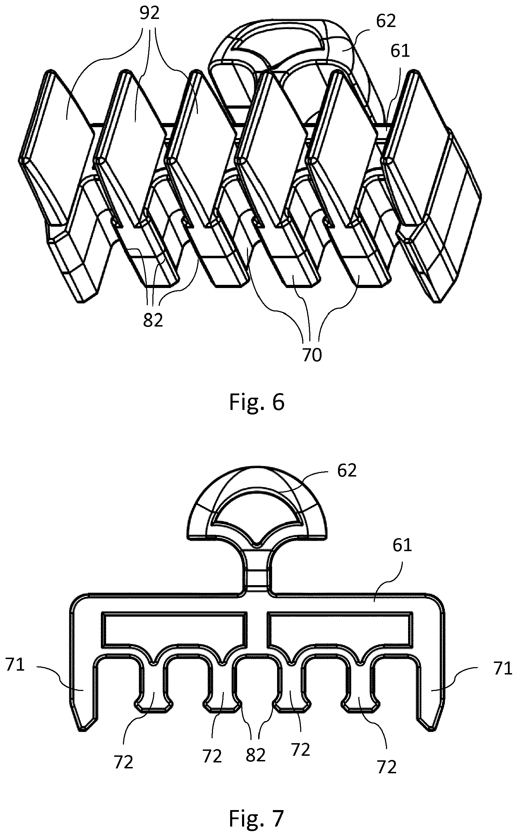

FIG. 6 is a perspective view of the cap of the retaining device of figure 2,
FIG. 7 is a front view of the cap of figure 6,

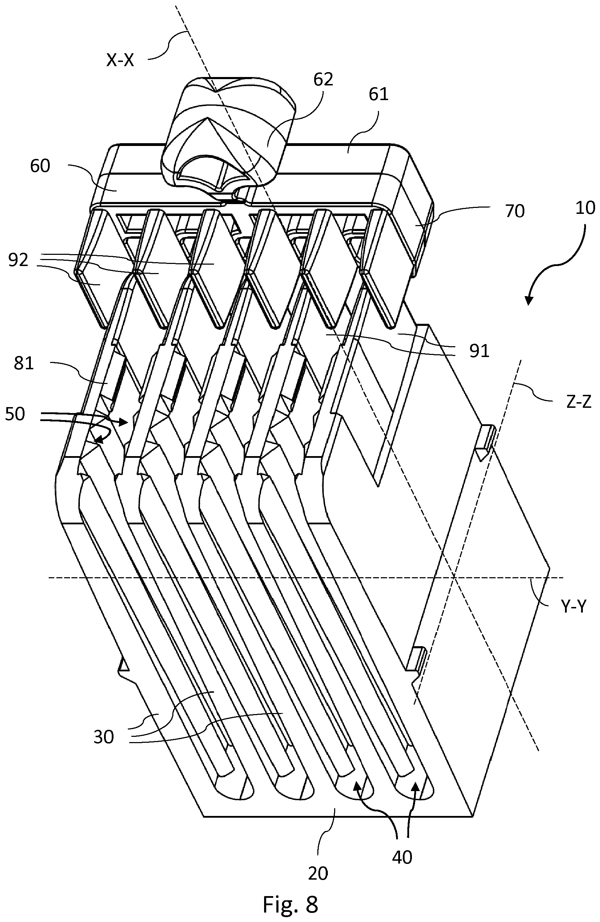

FIG. 8 is a perspective view of the retaining device of figure 2, in a partially assembled configuration.

### Detailed description

For the purposes of the present description and claims an optical fibre unit is an assembly comprising one (or more) optical fibre(s) surrounded by a protective outer layer. Optionally, a strength member, such as aramid fibres, and water swelling filaments may also be housed inside the protective outer layer. In turn, an optical fibre is an element constituted by a glass core, a glass cladding and a polymeric coating, in single or dual layer.

In some circumstances, to the purpose of the present description, an optical fibre unit may consist of an optical fiber only.

An optical cable is a cable in which one or more optical fibre units are arranged within an outer sheath, together with optional strength members, as required for the specific installation conditions.

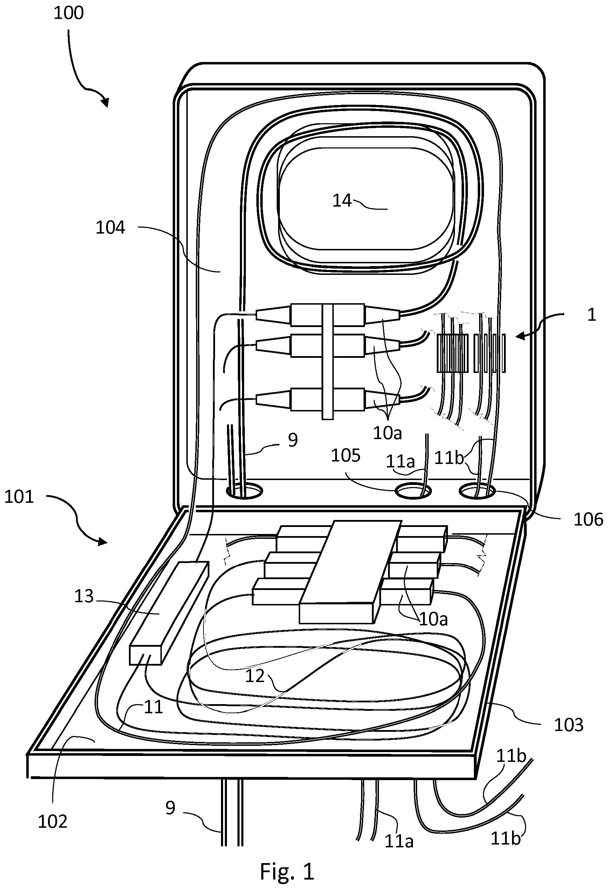

As schematically shown in Figure 1, in a user's premise typically one or more optical cables 9, for example drop cables, and optical fiber units 11a are routed to an optical box 100, in which they are terminated and connected, by means of relevant connectors 10a and relevant optical fiber units 11 and optical fibers 12, to other components, such as splitters 13. Excess lengths of optical fiber units 11 and optical fibers 12 are arranged in coils in appropriate areas and/or on trays 14 or the like. Finally, a number of optical fiber units 11b are routed out of the optical box 100 to reach end users. The function and the route of optical fiber units 11a and 11b in and out the optical box 100 has been described for exemplification reasons only, and may be different according to specific needs and functions of the box.

The optical box 100 comprises a housing 101 having a bottom 102, a peripheral wall 103 and a cover 104, suitable to be connected to the peripheral wall 103 of the housing 101, by hinges or the like.

The optical box 100 comprises inlet ports 105 for passage of optical fiber units 11a entering the optical box and outlet ports 106 for passage of optical fiber units 11b exiting the optical box 100.

The optical box 100 comprises one or more retaining devices 1, arranged in the housing 101 and configured to retain optical fiber units 11a, 11b entering or exiting the optical box 100. The retaining devices 1 are configured to prevent the optical fiber units 11a, 11b to be pulled out, thereby preventing possible damages of the components arranged inside the optical box 100. The number of the retaining devices 1 is dictated by the total number of optical fiber units 11a, 11b entering or exiting the optical box 100, by the size of the retaining devices 1 and by the available space within the optical box 100.

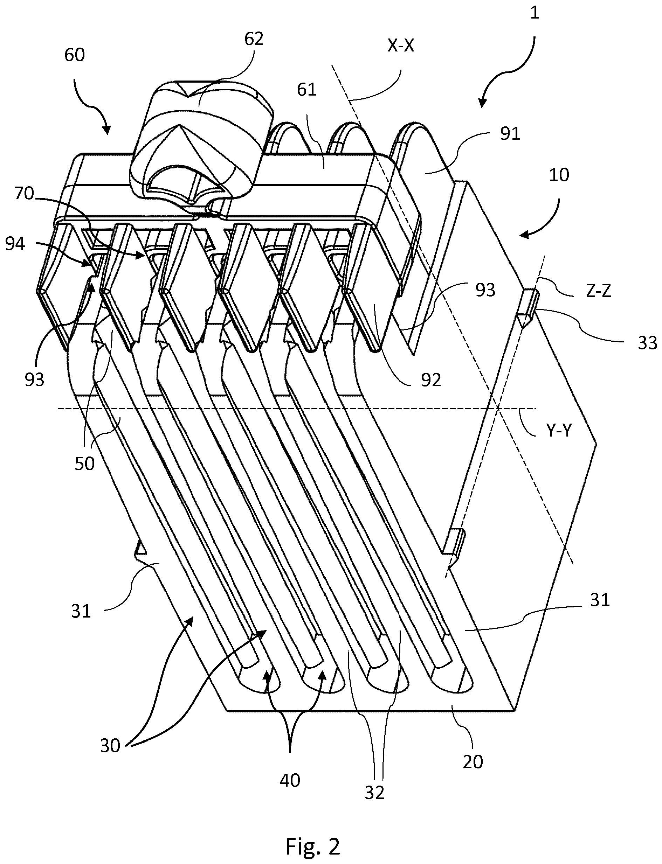

The retaining device 1, shown in figures 2 and following, comprises a comb 10.

The comb 10 comprises a base wall 20 and a plurality of retaining walls 30.

The comb 10 is suitable to be attached to the housing 101 or made integral therewith.

For example, the comb 10 can be attached to the housing 101 by means of protrusions 33 designed for being elastically coupled with corresponding coupling elements (not shown) of the housing 101.

The retaining walls 30 project from the base wall 20 along a first direction X-X.

The retaining walls 30 comprise two end retaining walls 31 positioned at the two opposite sides of the base wall 20, and intermediate retaining walls 32, in the example three intermediate retaining walls, arranged between the two end retaining walls 31.

The retaining walls 30 are arranged mutually spaced apart along a second direction Y-Y transverse to the first direction X-X to define seats 40 between two adjacent retaining walls. Each seat 40 is configured to house one or more optical fiber units arranged therein along a third direction Z-Z transverse to the first direction X-X and the second direction Y-Y. The seats 40 have size selected to house the optical fiber units with a certain degree of interference, effective to cause an elastic deformation generating a friction which prevents or limits undesired axial displacement of the inserted optical fiber units. When more than one optical fiber unit is required to be housed in one seat 40, such optical fiber units are arranged in rows in superimposed relationship along the first direction X-X.

Preferably, the second direction Y-Y is perpendicular to the first direction X-X. More preferably, the third direction Z-Z is perpendicular to the first directions X-X and the second direction Y-Y.

The end retaining walls 31, have a base portion 31a attached to the base wall 20, a mid portion 31b and a free end portion 31c and extend along the first direction X-X between the base portion 31a and the free end portion 31c. Similarly, the intermediate retaining walls 32, have a base portion 32a attached to the base wall 20, a mid portion 32b and a free end portion 32c and extend along the first direction X-X between the base portion 32a and the free end portion 32c.

In the embodiment in the appended figures, four seats 40 are shown, each seat 40 being defined between two respective adjacent retaining walls 30 and defining a column extending along the first direction X-X and configured to house one or more optical fiber units arranged in the column in superimposed rows. As well as the seats 40, the columns are arranged mutually spaced apart along the second direction Y-Y.

Each seat 40 extends along the third direction Z-Z and has an insertion opening 40a for inserting optical fiber units 11a, 11b in the seat 40 along the first direction X-X and two passage openings 40b, 40c for allowing the optical fiber units to pass through the seat 40 along the third direction Z-Z.

The retaining walls 30 are elastically deformable along the second direction Y-Y. The amount of such deformation depends on the nature of the material by which comb 10 is made. Typically, the comb is made of a relatively deformable polymeric material, such as polypropylene, mainly for costs reasons. Other, more expensive polymeric materials might provide less walls deformation, but would not totally avoid such deformation.

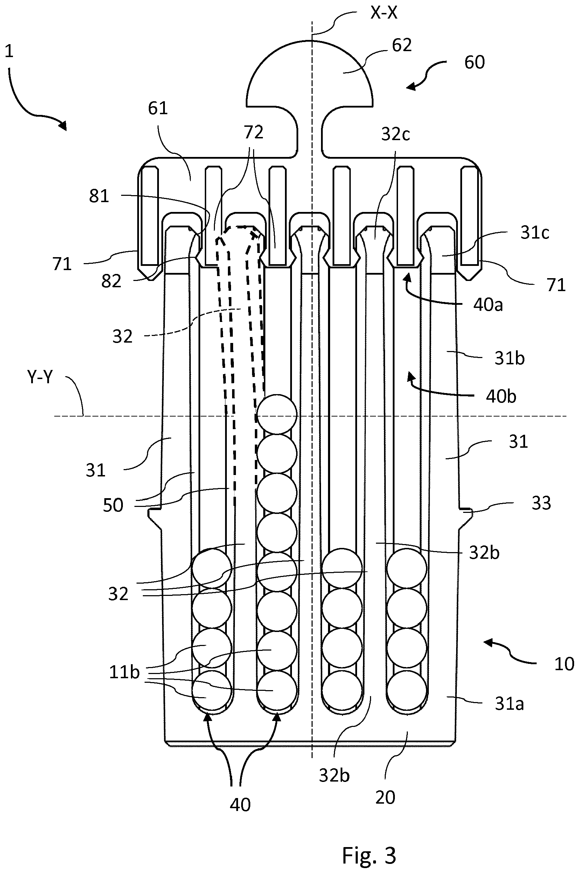

As shown in figure 3, when optical fiber units are inserted in multiple rows in the relevant seats 40, the retaining walls 30 may elastically bend in the second direction Y-Y relative to the base wall 20 thereby causing a decrease of friction between the seats 40 and the optical fiber units arranged in higher rows thereof.

Preferably, the retaining walls 30 have friction members 50 on their surfaces facing the adjacent retaining walls. The friction members 50 are configured to engage with the optical fiber units housed in the corresponding seats 40, with a predetermined amount of elastic interference, so as to prevent movement of the optical fiber units within the seats 40 along the third direction Z-Z.

In general, the number and shape of the friction members 50 depend on the specific construction of the retention device 1.

In the embodiment in the figures, the friction members 50 project from the relative retaining walls 30 into the corresponding seats 40.

According to one embodiment, some of the friction members 50 are oriented relative to the third direction Z-Z so as to restrain the movement of the optical fiber units mainly in a first direction, and some others are oriented relative to the third direction Z-Z so as to restrain the optical fiber units mainly in a direction opposite to the first direction, so as to increase the overall retention capability of the retention device 1.

The retaining device 1 comprises also a cap 60 configured to be removably attached to the comb 10 to prevent elastic bending of the retaining walls 30 and, consequently, maintain substantially constant the size of each seat 40 irrespective of the number of optical fiber units housed in the seats 40. Due to the attachment of the cap 60 to the comb 10, the friction between each optical fiber unit and the relevant seat 30 is substantially the same in two superimposed rows of optical fiber units.

According to the invention, the cap 60 is configured to engage each retaining wall 30 of the comb 10 to restrain elastic deformation of the retaining walls 30. Due to the engagement of the cap 60 with each retaining wall 30, a deformation of any retaining walls 30 possibly occurred upon insertion of optical fiber units in the relative seat is at least partially recovered, so that the deformed retaining walls are restored in the undeformed position.

Preferably, the cap 60 comprises securing walls 70, where each securing wall 70 is configured to be positioned in a corresponding seat 40 between two adjacent retaining walls 30 and to engage these two adjacent retaining walls 30.

Preferably, the cap 60 comprises a support portion 61 and the securing walls 70 project from the support portion 61 along the first direction X-X, and are arranged mutually spaced apart along the second direction Y-Y.

The securing walls 70 comprise two end securing walls 71 and a number of intermediate securing walls 72 equal to the number of seats 40 of the comb 10. In the example, four intermediate securing walls 72 are provided, in order to be inserted in the corresponding seats 40 of the comb 10. The two end securing walls 71 engage externally the end retaining walls 31.

According to one embodiment, the securing walls 70 engage the retaining walls 30 at a distal position from the base wall 20 along the first direction Y-Y, in particular the free end portions of the retaining walls 30.

Preferably, the retaining walls 30 and the securing walls 70 comprise corresponding ribs 81, 82 configured to cooperate to prevent displacement of the cap 60 relative to the comb 10 along the first direction X-X.

According to one embodiment, the ribs 81, 82 are formed at the free ends of respective retaining walls 30 and securing walls 70. Preferably, the ribs 81, 82 project from the respective retaining walls 30 and securing walls 70.

In order to facilitate attachment of the cap 60 to the comb 10 along the third direction Z-Z, even in the presence of a deformation of the retaining walls 30 of the comb 10 caused by optical fiber units insertion, preferably, the retaining walls 30 and the securing walls 70 comprise corresponding guiding portions 91, 92.

According to one embodiment, the guiding portions 91 of the retaining walls 30 and/or the guiding portions 92 of the securing walls 70 taper along the third direction Z-Z to guide attachment of the cap 60 with the comb 10 along this third direction Z-Z.

Conveniently, the guiding portions 91 of the end retaining walls 31 have reduced thickness with respect the remaining portions of the end retaining walls 31, so as to form an abutment 93 configured to engage with a corresponding abutment 94 of the end securing walls 71 in order to facilitate the insertion of the cap 60 in the appropriate position on top of the comb 10.

In order to facilitate the handling of the cap 60, a small handle 62 is conveniently provided in the middle of the support portion 61. In order to prevent loss of the cap 60, the cap 60 can be connected to the comb 10 by a small flexible link (not shown).

The retaining device 1 according to the invention enables insertion of a number of optical fiber units in a first row (for example four optical fiber units, as shown in the figures) and further insertion of a second row of optical fiber units on top of the first rows, and further rows according to the needs.

The deformation of the retaining walls 30 of the comb 10, caused by the insertion of the lower row of optical fiber units in the seats 40 would cause a poor retention capability for the upper rows of optical fiber units, but the insertion of the cap 60 restores the original shape of the retaining walls, thereby providing the desired retaining strength.

In this manner, each one of the rows of optical fiber units housed in the seats 40 has substantially the same retention capability, i.e. substantially the same pulling force is required to cause an optical fiber unit to slip out of the retaining device 1.

This is obtained also in case one seat 40 contains more rows of optical fiber units than the adjacent seats, because the cap 60 always maintains the correct position of the free ends of the retaining walls, irrespective of the number of optical fiber units inserted therein, so that each optical fiber unit has the prescribed degree of interference sufficient to cause the desired retaining strength.

In this manner, a relatively high number of optical fiber units can be stored in the retaining device, without increasing its transverse dimension (i.e. in the Y-Y direction), enabling an overall reduction of the size of the distribution box 1, or insertion of a larger number of components therein.

## Claims

1. An optical box (100) comprising:
- a housing (101),
- a retaining device (1) arranged in the housing (101) and comprising at least two substantially parallel seats (40),
wherein the seats (40) are configured to house optical fiber units (11a, 11b) with friction between each optical fiber unit (11a, 1 1b) and the relevant seat (40),
wherein the retaining device (1) is configured to house optical fiber units arranged in at least two columns and two superimposed rows, and
wherein the friction between each optical fiber unit and the corresponding seat (40) is substantially the same in two superimposed rows
wherein the retaining device (1) comprises:
- a comb (10) having retaining walls (30), the seats (40) being defined by two adjacent retaining walls (30); and
- a cap (60) configured to be removably attached to the comb (10) to maintain substantially constant the size of each seat (40),
wherein the comb (10) comprises a base wall (20), the retaining walls (30) projecting from the base wall (20) along a first direction (X-X), the retaining walls (30) being arranged mutually spaced apart along a second direction (Y-Y) transverse to the first direction (X-X) to define seats (40) between two adjacent retaining walls (30), the retaining walls (30) being elastically deformable along the second direction (Y-Y), each seat (40) being configured to retain one or more optical fiber units arranged therein along a third direction (Z-Z) transverse to the first direction (X-X) and the second direction (Y-Y), in superimposed relationship in the first direction (X-X),
**characterized in that**, the cap (60) being configured to engage each retaining wall (30) of the comb (10) to restrain elastic deformation of the retaining walls (30).

2. The optical box (100) according to claim 1, wherein:
- the cap (60) comprises securing walls (70),
- each securing wall (70) is configured to be positioned in a corresponding seat (40) between two adjacent retaining walls (30) and to engage at least one of the two adjacent retaining walls (30).

3. The optical box (100) according to claim 2, wherein:
- each securing wall (70) is configured to engage two adjacent retaining walls (30).

4. The optical box (100) according to any of claims 1 to 3, wherein:
- the cap (60) is configured to engage the retaining walls (30) at a distal position from the base wall (20) along the first direction (X-X).

5. The optical box (100) according to any of claims 1 to 4, wherein:
- the cap (60) comprises a support portion (61),
- the securing walls (70) project from the support portion (61) along the first direction (X-X) and are arranged mutually spaced apart along the second direction (Y-Y).

6. The optical box (100) according to claim 5, wherein:
- the retaining walls (30) comprise two end retaining walls (31) positioned at the two opposite sides of the base wall (20), and intermediate retaining walls (32) arranged between the two end retaining walls (31),
- the securing walls (70) comprise two end securing walls (71) positioned at the two opposite sides of the support portion (61), and intermediate securing walls (72) arranged between the two end securing walls (71), the number of intermediate securing walls (72) being equal to the number of seats (40) of the comb (10).

7. The optical box (100) according to claim 6, wherein:
- the intermediate securing walls (72) are configured to be inserted in the corresponding seats (40) of the comb (10),
- the two end securing walls (71) are configured to engage externally the end retaining walls (31) of the comb (10).

8. The optical box (100) according to any of claims 1 to 7, wherein:
- the retaining walls (30) and the securing walls (70) comprise corresponding ribs (81, 82) configured to cooperate to prevent displacement of the cap (60) relative to the comb (10) along the first direction (X-X).

9. The optical box (100) according to claim 8, wherein:
- the ribs (81, 82) are formed at free ends portions of respective retaining walls (30) and securing walls (70).

10. The optical box (100) according to any of claims 1 to 9, wherein:
- the retaining walls (30) and the securing walls (70) comprise corresponding guiding portions (91, 92) to guide attachment of the cap (60) with the comb (10) along the third direction (Z-Z).

11. The optical box (100) according to any of claims 1 to 10, wherein:
- each retaining wall (30) has at least one surface facing an adjacent retaining wall (30),
- said at least one surface comprises friction members (50) configured to engage optical fiber units arranged in the corresponding seat (40).

12. The optical box (100) according to any of claims 1 to 11, wherein:
- each seat (40) has an insertion opening (40a) for inserting optical fiber units in the seat (40) along the first direction (X-X) and two passage openings (40b, 40c) for allowing the optical fiber units to pass through the seat (40) along the third direction (Z-Z).

## Patentansprüche

1. Eine optische Box (100), die Folgendes umfasst:
- ein Gehäuse (101),
- eine Haltevorrichtung (1), die in dem Gehäuse (101) angeordnet ist und mindestens zwei im Wesentlichen parallele Sitze (40) umfasst, wobei die Sitze (40) so konfiguriert sind, dass sie optische Fasereinheiten (11a, 11b) mit Reibung zwischen jeder optischen Fasereinheit (11a, 11b) und dem relevanten Sitz (40) aufnehmen, wobei die Haltevorrichtung (1) so konfiguriert ist, dass sie Lichtleitfasereinheiten aufnimmt, die in mindestens zwei Spalten und zwei übereinanderliegenden Reihen angeordnet sind, und wobei die Reibung zwischen jeder Lichtleitfasereinheit und dem entsprechenden Sitz (40) in zwei übereinanderliegenden Reihen im Wesentlichen die gleiche ist, wobei die Haltevorrichtung (1) umfasst:
- einen Kamm (10) mit Rückhaltewänden (30), wobei die Sitze (40) durch zwei benachbarte Rückhaltewände (30) definiert sind; und
- eine Kappe (60), die so konfiguriert ist, dass sie abnehmbar an dem Kamm (10) befestigt werden kann, um die Größe jedes Sitzes (40) im Wesentlichen konstant zu halten, wobei der Kamm (10) eine Basiswand (20) umfasst, wobei die Haltewände (30) von der Basiswand (20) entlang einer ersten Richtung (X-X) vorstehen, wobei die Haltewände (30) entlang einer zweiten Richtung (Y-Y) quer zu der ersten Richtung (X-X) voneinander beabstandet angeordnet sind, um Sitze (40) zwischen zwei benachbarten Haltewänden (30) zu definieren, die Haltewände (30) entlang der zweiten Richtung (Y-Y) elastisch verformbar sind, wobei jeder Sitz (40) so konfiguriert ist, dass er eine oder mehrere optische Fasereinheiten, die darin entlang einer dritten Richtung (Z-Z) quer zu der ersten Richtung (X-X) und der zweiten Richtung (Y-Y) angeordnet sind, in übereinanderliegender Beziehung in der ersten Richtung (X-X) hält, **dadurch gekennzeichnet, dass** die Kappe (60) so konfiguriert ist, dass sie mit jeder Haltewand (30) des Kammes (10) in Eingriff kommt, um eine elastische Verformung der Haltewände (30) zu verhindern.

2. Optische Box (100) nach Anspruch 1, wobei:
- die Kappe (60) Sicherungswände (70) umfasst,
- jede Befestigungswand (70) so konfiguriert ist, dass sie in einem entsprechenden Sitz (40) zwischen zwei benachbarten Haltewänden (30) positioniert wird und in mindestens eine der beiden benachbarten Haltewände (30) eingreift.

3. Optische Box (100) nach Anspruch 2, wobei:
- jede Sicherungswand (70) so gestaltet ist, dass sie in zwei benachbarte Haltewände (30) eingreift.

4. Optische Box (100) nach einem der Ansprüche 1 bis 3, wobei:
- die Kappe (60) so gestaltet ist, dass sie mit den Haltewänden (30) in einer von der Basiswand (20) entfernten Position entlang der ersten Richtung (X-X) in Eingriff kommt.

5. Optische Box (100) nach einem der Ansprüche 1 bis 4, wobei:
- die Kappe (60) einen Stützabschnitt (61) aufweist,
- die Befestigungswände (70) von dem Stützteil (61) entlang der ersten Richtung (X-X) vorstehen und entlang der zweiten Richtung (Y-Y) voneinander beabstandet angeordnet sind.

6. Optische Box (100) nach Anspruch 5, wobei:
- die Haltewände (30), die zwei Endhaltewände (31) aufweisen, die an den beiden gegenüberliegenden Seiten der Bodenwand (20) angeordnet sind, und Zwischenhaltewände (32), die zwischen den beiden Endhaltewänden (31) angeordnet sind, umfassen,
- die Befestigungswände (70) zwei Endbefestigungswände (71), die an den beiden gegenüberliegenden Seiten des Stützteils (61) angeordnet sind, und Zwischenbefestigungswände (72), die zwischen den beiden Endbefestigungswänden (71) angeordnet sind, umfassen, wobei die Anzahl der Zwischenbefestigungswände (72) gleich der Anzahl der Sitze (40) des Kammes (10) ist.

7. Optische Box (100) nach Anspruch 6, wobei:
- die Zwischensicherungswände (72) so gestaltet sind, dass sie in die entsprechenden Sitze (40) des Kammes (10) eingesetzt werden können,
- die beiden Endsicherungswände (71) so gestaltet sind, dass sie von außen in die Endhaltewände (31) des Kammes (10) eingreifen.

8. Optische Box (100) nach einem der Ansprüche 1 bis 7, wobei:
- die Haltewände (30) und die Sicherungswände (70) entsprechende Rippen (81, 82) aufweisen, die so gestaltet sind, dass sie zusammenwirken, um eine Verschiebung der Kappe (60) relativ zum Kamm (10) entlang der ersten Richtung (X-X) zu verhindern.

9. Optische Box (100) nach Anspruch 8, wobei:
- die Rippen (81, 82) an den freien Endabschnitten der jeweiligen Rückhaltewände (30) und Sicherungswände (70) ausgebildet sind.

10. Optische Box (100) nach einem der Ansprüche 1 bis 9, wobei:
- die Haltewände (30) und die Befestigungswände (70) entsprechende Führungsabschnitte (91, 92) aufweisen, um die Befestigung der Kappe (60) am Kamm (10) entlang der dritten Richtung (Z-Z) zu führen.

11. Optische Box (100) nach einem der Ansprüche 1 bis 10, wobei:
- jede Haltewand (30) mindestens eine Fläche aufweist, die einer benachbarten Haltewand (30) zugewandt ist,
- die mindestens eine Fläche Reibungselemente (50) umfasst, die so konfiguriert sind, dass sie in optische Fasereinheiten eingreifen, die in dem entsprechenden Sitz (40) angeordnet sind.

12. Die optische Box (100) nach einem der Ansprüche 1 bis 11, wobei:
- jeder Sitz (40) eine Einführöffnung (40a) zum Einführen von optischen Fasereinheiten in den Sitz (40) entlang der ersten Richtung (X-X) und zwei Durchgangsöffnungen (40b, 40c) aufweist, die es den optischen Fasereinheiten ermöglichen, den Sitz (40) entlang der dritten Richtung (Z-Z) zu passieren.

## Revendications

1. Boîte optique (100) comprenant :
- un boîtier (101),
- un dispositif de retenue (1) agencé dans le boîtier (101) et comprenant au moins deux sièges (40) sensiblement parallèles,
dans laquelle les sièges (40) sont configurés pour loger des unités de fibre optique (11a, 11b) avec un frottement entre chaque unité de fibre optique (11a, 11b) et le siège (40) correspondant,
dans laquelle le dispositif de retenue (1) est configuré pour loger des unités de fibre optique agencées dans au moins deux colonnes et deux rangées superposées, et
dans laquelle le frottement entre chaque unité de fibre optique et le siège (40) correspondant est sensiblement le même dans deux rangées superposées,
dans laquelle le dispositif de retenue (1) comprend :
- un peigne (10) ayant des parois de retenue (30), les sièges (40) étant définis par deux parois de retenue (30) adjacentes ; et
- un capuchon (60) configuré pour être raccordé de manière amovible au peigne (10) pour maintenir la taille de chaque siège (40) sensiblement constante,
dans laquelle le peigne (10) comprend une paroi de base (20), les parois de retenue (30) faisant saillie à partir de la paroi de base (20) le long d'une première direction (X-X), les parois de retenue (30) étant agencées mutuellement espacées le long d'une deuxième direction (Y-Y) transversale à la première direction (X-X) pour définir des sièges (40) entre deux parois de retenue (30) adjacentes, les parois de retenue (30) étant élastiquement déformable le long de la deuxième direction (Y-Y), chaque siège (40) étant configuré pour retenir une ou plusieurs unités de fibre optique agencées dans celui-ci le long d'une troisième direction (Z-Z) transversale à la première direction (X-X) et à la deuxième direction (Y-Y), dans une relation de superposition dans la première direction (X-X),
**caractérisée en ce que** le capuchon (60) est configuré pour se mettre en prise avec chaque paroi de retenue (30) du peigne (10) pour restreindre une déformation élastique des parois de retenue (30).

2. Boîte optique (100) selon la revendication 1, dans laquelle :
- le capuchon (60) comprend des parois de fixation (70),
- chaque paroi de fixation (70) est configurée pour être positionnée dans un siège (40) correspondant entre deux parois de retenue (30) adjacentes et pour se mettre en prise avec au moins l'une des deux parois de retenue (30) adjacentes.

3. Boîte optique (100) selon la revendication 2, dans laquelle :
- chaque paroi de fixation (70) est configurée pour se mettre en prise avec deux parois de retenue (30) adjacentes.

4. Boîte optique (100) selon l'une quelconque des revendications 1 à 3, dans laquelle :
- le capuchon (60) est configuré pour se mettre en prise avec les parois de retenue (30) à une position distale de la paroi de base (20) le long de la première direction (X-X).

5. Boîte optique (100) selon l'une quelconque des revendications 1 à 4, dans laquelle :
- le capuchon (60) comprend une partie de support (61),
- les parois de fixation (70) font saillie à partir de la partie de support (61) le long de la première direction (X-X) et sont agencées mutuellement espacées le long de la deuxième direction (Y-Y).

6. Boîte optique (100) selon la revendication 5, dans laquelle :
- les parois de retenue (30) comprennent deux parois de retenue d'extrémité (31) positionnées au niveau des deux côtés opposés de la paroi de base (20), et des parois de retenue intermédiaires (32) agencées entre les deux parois de retenue d'extrémité (31),
- les parois de fixation (70) comprennent deux parois de fixation d'extrémité (71) positionnées au niveau des deux côtés opposés de la partie de support (61), et des parois de fixation intermédiaire (72) agencées entre les deux parois de fixation d'extrémité (71), le nombre de parois de fixation intermédiaires (72) étant égal au nombre de sièges (40) du peigne (10).

7. Boîte optique (100) selon la revendication 6, dans laquelle :
- les parois de fixation intermédiaires (72) sont configurées pour être insérées dans les sièges (40) correspondants du peigne (10),
- les deux parois de fixation d'extrémité (71) sont configurées pour se mettre en prise de manière externe avec les parois de retenue d'extrémité (31) du peigne (10).

8. Boîte optique (100) selon l'une quelconque des revendications 1 à 7, dans laquelle :
- les parois de retenue (30) et les parois de fixation (70) comprennent des nervures (81, 82) correspondantes configurées pour coopérer afin d'empêcher tout déplacement du capuchon (60) par rapport au peigne (10) le long de la première direction (X-X).

9. Boîte optique (100) selon la revendication 8, dans laquelle :
- les nervures (81, 82) sont formées au niveau de parties d'extrémités libres de parois de retenue (30) respectives et de parois de fixation (70) respectives.

10. Boîte optique (100) selon l'une quelconque des revendications 1 à 9, dans laquelle :
- les parois de retenue (30) et les parois de fixation (70) comprennent des parties de guidage (91, 92) correspondantes pour guider un raccordement du capuchon (60) au peigne (10) le long de la troisième direction (Z-Z).

11. Boîte optique (100) selon l'une quelconque des revendications 1 à 10, dans laquelle :
- chaque paroi de retenue (30) a au moins une surface orientée vers une paroi de retenue (30) adjacente,
- ladite au moins une surface comprend des éléments de frottement (50) configurés pour se mettre en prise avec des unités de fibre optique agencées dans le siège (40) correspondant.

12. Boîte optique (100) selon l'une quelconque des revendications 1 à 11, dans laquelle :
- chaque siège (40) a une ouverture d'insertion (40a) pour insérer des unités de fibre optique dans le siège (40) le long de la première direction (X-X) et deux ouvertures de passage (40b, 40c) pour permettre aux unités de fibre optique de passer à travers le siège (40) le long de la troisième direction (Z-Z).
